# EUROPÄISCHE PATENTANMELDUNG

(11) **EP 1 128 697 A1**
(43) Veröffentlichungstag der Anmeldung: **29.08.2001**
(21) Anmeldenummer: 00810159.4
(22) Anmeldetag: 24.02.2000
(51) Int. Cl.: H04Q 7/38

(54) **Verfahren zum Betreiben eines mobilen Gerätes**

(71) Anmelder: Ascom AG, 3000 Bern 14 (CH)
(72) Erfinder: Baiker, Stefan, 4053 Basel (CH)
(74) Vertreter: Roshardt, Werner Alfred, Dipl.-Phys.

(57) **Zusammenfassung**

Beim Betreten eines Gebäudes (2) bzw. Raumes wird ein mobiles Gerät, beispielsweise ein Handy (3), ortsabhängig signalgesteuert in einen als nicht störend empfundenen Betriebszustand umgeschaltet. Die Anweisung zur signalgesteuerten Umschaltung kann durch verschiedene Sendevorrichtungen übertragen werden. Einerseits kann die Übertragung der Signale zur automatischen Umschaltung durch Funkbasisstationen (5) oder GSM-Basisstationen erfolgen. Anderseits kann die signalgesteuerte Umschaltung durch Sendebereiche von Schleusen (4) oder Funkbasisstationen (5) ausgelöst werden, welche der Benutzer (1) beim Betreten des Gebäudes (2) bzw. Raumes durchschreitet. Verlässt der Benutzer (1) das Gebäude (2) bzw. den Raum und durchschreitet die Schleuse (4) oder befindet sich ausserhalb des Sendebereichs der Funkbasisstation (5), wird der ursprünglich eingestellte Betriebszustand wiederhergestellt. Durch die ortsabhängige signalgesteuerte Umschaltung wird den Bedürfnissen der Allgemeinheit Rechnung getragen.

## Beschreibung

### Technisches Gebiet

Die Erfindung betrifft ein Verfahren zum Betreiben eines mobilen Gerätes mit mindestens zwei Betriebszuständen, wovon mindestens einer ein sensorisch feststellbarer Signalisierungszustand ist. Ferner bezieht sich die Erfindung auf eine Vorrichtung zur Durchführung dieses Verfahrens.

### Stand der Technik

Die Zunahme von mobilen Kommunikationsgeräten sorgt dafür, dass die daraus resultierenden Störungen unserer Gesellschaft immer grösser werden. Besonders die Zunahme bei den sogenannten Handys (mobile Handfunk-Telefonapparate) ist exponential steigend und wird noch weiter zunehmen. So wird heute fast überall mit dem Handy telefoniert. In gewissen Umgebungen, wie z.B. in Schulen, bei Vorträgen, in Kinos, in Konzerten, in Kirchen, in Restaurants, in einem Ruheabteil von Zügen usw. ist aber eine akustische Rufsignalisierung unerwünscht und störend. Damit die Geräte auch dort auf Empfang bleiben können, wo akustische Störungen unerwünscht sind, verfügen moderne Kommunikationsmittel, insbesondere Handys, über verschiedene Optionen für die Rufsignalisierung. So sind Umschaltungen von akustischer Rufsignalisierung in visuelle oder fühlbare Rufsignalisierung, insbesondere von Vibrationen, bekannt (z.B. DE 29 702 505 U; EP 0 467 071; US 5,353,017).

Der Gebrauch von Kommunikationsmitteln ist teils aus sicherheitstechnischen Überlegungen auch generell untersagt. In Flugzeugen können mobile Kommunikationsmittel besonders bei Start und Landung im elektronischen System des Flugzeuges Störungen und damit Sicherheitsprobleme hervorrufen.

Zur Vermeidung von Störungen der genannten Art werden deshalb an geeigneten Orten Tafeln angebracht, welche die Benutzer von Handys auffordern, ihre Geräte auszuschalten bzw. umzustellen. All diese Umschaltungen und Einstellungen müssen selbstverständlich vom Benutzer selbst vorgenommen werden. Doch dies wird vielfach vergessen, so dass trotz den heutigen technischen Möglichkeiten von verschiedenen Betriebszuständen Störungen vor allem durch mobile Kommunikationsgeräte auftreten.

Es sind deshalb schon Geräte auf den Markt gebracht worden, welche als starke Störsender wirken und die Kommunikation zwischen Basisstation und Handy blockieren. Dabei verunmöglicht das Störsignal jegliche ordnungsgemässe Decodierung, so dass aus der Sicht des Handys keine Basisstation vorhanden ist. Als Folge davon können nicht nur keine ankommenden Gespräche empfangen werden, sondern es werden auch laufende Gespräche sofort abgebrochen, wenn solche Störsender eingeschaltet werden.

Alle bekannten Systeme befriedigen für die heutige und zukünftige Situation nicht.

### Darstellung der Erfindung

Aufgabe der Erfindung ist es, ein Verfahren zu schaffen, welches die störenden Auswirkungen der Signalisierungen auf ein Minimum beschränkt und einen hohen Bedienungskomfort aufweist.

Die Lösung der Aufgabe ist durch die Merkmale des Anspruchs 1 definiert. Gemäss der Erfindung wird eine Umschaltung zwischen einem ersten und zweiten Betriebszustand eines mobilen Gerätes ortsabhängig signalgesteuert und damit automatisch durchgeführt. Das mobile Gerät weist mindestens zwei verschiedene Betriebszustände auf, wovon mindestens einer ein sensorisch feststellbarer Signalisierungszustand ist. Als Signalisierungszustand wird der Betriebszustand verstanden, welcher eine sensorisch feststellbare Signalisation eines ankommenden Anrufs bzw. Mitteilung vorsieht. Sobald das mobile Gerät in den definierten Ortsbereich eindringt oder diesen wieder verlässt, wird eine ortsabhängige Umschaltung des mobilen Gerätes automatisch durchgeführt. Wesentlich ist, dass das mobile Gerät ein decodierbares Signal empfängt und unter Auswertung dieses Signals mittelbar oder unmittelbar eine Umschaltung vornimmt.

Bei der erfindungsgemässen ortsabhängigen signalgesteuerten Umschaltung entfällt die manuelle Bedienung durch den Benutzer. Der Benutzer braucht sich im Prinzip nicht dauernd um den Betriebszustand seines mobilen Gerätes zu kümmern und trotzdem wird den Bedürfnissen der Öffentlichkeit Rechnung getragen.

Das Verfahren findet insbesondere bei Betriebszuständen Anwendung, welche sensorisch feststellbar sind. Sensorisch feststellbar sind akustische, visuelle und fühlbare Signalisierungen. Gerade die akustischen Signalisierungen sind oft das Problem, da diese die meisten Störungen für die Gesellschaft verursachen. Visuelle Signalisierungen, z.B. mit einer blinkenden Lichtquelle, sind dezenter als akustische, aber oft auch nicht erwünscht. Vibrationen, welche vom mobilen Gerät erzeugt werden, sind auch sensorisch feststellbar, wenn das mobile Gerät nicht sichtbar in einer Tasche verstaut ist, und erzeugen, wie auch die visuellen Signalisierungen, weniger Störungen.

Der Bereich, in dem die automatische Schaltung aktiv ist, ist nicht auf geschlossene Raumbereiche beschränkt. Die Definition des Bereichs kann z.B. über GPS-Koordinaten (**G**lobal **P**ositioning **S**ystem) erfolgen. Dabei spielt es keine Rolle, ob die Koordinaten vom Benutzer des mobilen Gerätes eingegeben werden oder ob von einer zentralen Stelle gewisse Bereiche über solche Koordinaten aus dem allgemeinen Netzabdeckungsbereich ausgeschieden werden.

Dieses Verfahren und auch die dazugehörigen Vorrichtungen sind für jedes mobile Gerät einsetzbar. Insbesondere für Geräte, welche Anrufe bzw. Mitteilungen empfangen können und den Erhalt der Anrufe bzw. Mitteilungen in irgendeiner Form signalisieren. Vorzugsweise wird dieses Verfahren jedoch für Kommunikationsgeräte wie Handys, Pager oder Funkgeräte verwendet. Auch bei Schnurlostelefon-Systemen ist dieses Verfahren anwendbar. Neben dieser vorzugsweisen Anwendung für Kommunikationsgeräte kann dieses Verfahren auch bei anderen Geräten wie z.B. Fahrzeugen mit Hupen Anwendung finden, wobei diese Geräte mit einer Empfangsanlage ausgerüstet sind. Es ist denkbar z.B. im Umfeld von Spitälern oder Rehabilitationszentren Hupen von Fahrzeugen über ein solches System zu blockieren. Eine solche Blockierung bzw. Sperrung liesse sich natürlich auf ein ganzes Stadtgebiet ausweiten.

Die Blockierung bzw. Sperrung lässt sich auf jedes mobile Gerät, insbesondere bei Kommunikationsgeräten anwenden und es liegt im Sinne der Erfindung, dass auch diese Variante unter den Begriff des Betriebszustandes fällt.

Alle automatischen Umschaltungen können auch zeitlich begrenzt sein. Dies kann vor allem bei Konzerten oder Kinos Anwendung finden, wenn deren Dauer bekannt ist. Es ist also denkbar, dass zu Beginn eines Konzertes das Signal an alle mobilen Geräte ausgesandt wird, die akustische Signalisierung abzuschalten. Nach Beendigung der Veranstaltung wird ein weiteres Signal ausgesendet, welches den ursprünglich eingestellten Betriebszustand wieder herstellt.

Eine Variante dieser Ausführungsform ist, dass beispielsweise ein Handy durch ein Signal in einen "Sleep mode" geschaltet wird. Nach einer bestimmten Zeit wird der ursprünglich eingestellte Zustand durch das Handy selbst wieder zurückgestellt.

Ein anderer Betriebszustand kann auch eine Umleitung der ankommenden Anrufe bzw. Mitteilungen darstellen. Vorzugsweise wird auf eine Mailbox umgeleitet, auf der der Benutzer später die Anrufe bzw. Mitteilungen abrufen kann. Auch eine Umleitung auf ein anderes Gerät, z.B. einen Festanschluss einer Sekretärin, ist denkbar. Bei der Art der Umleitungen sind keine Grenzen gesetzt.

Ein Betriebszustand kann auch ein Standby- oder Sleep mode-Zustand sein. Standby ist eine Funktion, bei der sich das mobile Gerät in "Bereitschaft" befindet. Ein Einschalten nach Freigabe durch die ortsabhängige Signalisierung erlaubt ein Einschalten des Gerätes ohne sonstige technisch bedingte Verzögerungen. Bei dem Sleep mode handelt es sich um eine Sonderform des Standbys. Das mobile Gerät wird auch systemintern heruntergefahren, so dass trotz eingeschaltenem Zustand der Energieverbrauch auf einem Minimum gehalten wird. Die Einschaltung des Gerätes nach Freigabe der ortsabhängigen Signalisierung erfolgt mit einer technisch bedingten Verzögerung.

Eine andere Definition des Ortsbereiches kann über eine Funkbasisstation erfolgen, welche Signale mit Anweisungen zur Umschaltung eines bestimmten Signalisierungszustandes aussendet. Jede Art von Funkbasisstation kann verwendet werden, sofern es diese ermöglicht, irgendeine Form von Signalen für eine automatische Umschaltung auszusenden. Es ist hierbei möglich, dass eine Basisstation eines Schnurlostelefons auch Signale aussendet, welche dafür sorgen, dass Handys ihren Signalisierungszustand gemäss den vom System vorgegebenen Einstellungen automatisch umschalten, wenn sie in den Sendebereich dieser Basisstation eindringen. Mit den vom System vorgegebenen Einstellungen ist die Art der Umschaltung definiert, welche für diesen Ortsbereich gewünscht ist. Dies kann beispielsweise eine Umschaltung auf einen anderen als akustischen Signalisierungszustand oder eine Umleitung auf eine Mailbox sein. Es stehen noch weitere Alternativen zur normalen akustischen Signalisierung zur Verfügung. So kann die signalgesteuerte Umschaltung ein Leiserstellen der akustischen Signalisation oder eine Beschränkung auf eine einmalige bzw. eine kurze akustische Signalisation sein. Ein Ortsbereich kann beispielsweise auch durch eine Basisstation des für den Mobilfunkverkehr (z.B. GSM oder UMTS) zuständigen Systems oder einer durch eine Kombination solcher Basisstationen definiert werden.

Zur Bestimmung, ob sich ein mobiles Gerät innerhalb eines Ortsbereiches befindet, in welchem sich z.B. eine akustische Signalisierung als störend erweisen würde, stehen verschiedene Möglichkeiten zur Verfügung. Einerseits kann diese Abfrage von einer Zentrale oder Funkbasisstation nach dem Prinzip "Ist ein mobiles Gerät hier, welches eine akustische Signalisierung aufweist?" erfolgen ("zentralenorientierte Abfrage"). Anderseits könnte auch das mobile Gerät nach dem Prinzip "Darf ich mich hier akustisch bemerkbar machen?" sich selbst einstellen ("geräteorientierte Abfrage"). Wird die Präsenz eines solchen Gerätes in irgendeiner Form festgestellt, wird diesem das Signal zur signalgesteuerten Umschaltung des vom System vorgegebenen Betriebszustandes übermittelt.

Die signalgesteuerte Umschaltung kann auch durch eine separate Sendevorrichtung erfolgen. Denkbar sind verschiedene Systeme, welche hier nicht abschliessend aufgeführt sind.

Einerseits können bei den Ein- und Ausgängen zu einem definierten Ortsbereich Induktionsschlaufen angeordnet sein, welche bei den mobilen Geräten die automatische Umschaltung auslösen.

Bei DECT- oder Bluetooth-Systemen können neben den standardisierten Frequenzbereichen des DECT oder Bluetooth die Signale zur signalgesteuerten Umschaltung in den Frequenzbändern der mobilen Geräte ausgesendet (für Handys z.B. in den GSM- oder UMTS-Frequenzbändern), bzw. von GSM- oder UMTS-Funkbasisstationen Signale zur automatischen Umschaltung in den Frequenzen des DECT- oder Bluetooth-Standards ausgestrahlt werden.

Entsprechend einem weiteren Beispiel kann die Übertragung von Signalen auch über eine akustische oder Infrarot-Sendevorrichtung erfolgen.

Wenn das mobile Gerät mit einem Autorisierungsmittel (z.B. einem Berechtigungscode) ausgerüstet ist, können verschiedenen Geräten mehrere Optionen oder Prioritätsstufen zugeordnet werden. Um eine prioritätsabhängige Schaltung zu ermöglichen, ist das Autorisierungsmittel der Steuerungseinheit zugeordnet. Vorzugsweise ist das Autorisierungsmittel in einer SIM-Karte integriert. Darin enthalten sind eine oder mehrere übergeordnete Systemanweisungen, welche es ermöglichen, gewisse Optionen so einzustellen, dass bestimmte Umschaltungen nicht vorgenommen werden. Für besonders wichtige Personen (Ärzte, Feuerwehrleute im Pikettdienst etc.) werden somit gegebenenfalls allgemeine Umschaltungen nicht ausgeführt. Von besonderer Bedeutung ist, dass somit eine erfindungsgemässe Umschaltung des mobilen Gerätes verhindert wird, wenn sich der Benutzer im Dienst befindet.

Eine Vorrichtung zur Durchführung des oben beschriebenen Verfahrens beinhaltet ein mobiles Gerät, welches bei dem Erhalt von Anrufen bzw. Mitteilungen eine Signalisation vornimmt, und eine Sendevorrichtung, welche ein Signal zur signalgesteuerten Umschaltung des mobilen Geräts aussendet.

Das mobile Gerät umfasst mindestens ein Mittel zur Signalisierung, mindestens ein Mittel zum Umschalten zwischen dem ersten und dem zweiten Betriebszustand, mindestens ein Mittel zum Ansteuern des Mittels zum Umschalten und mindestens ein Mittel zum Empfangen von Signalen. Zusätzlich kann ein Autorisierungsmittel angeordnet sein, welches eine spezifische Identifizierung ermöglicht. Das Mittel zur Signalisierung kann von jeder sensorisch feststellbaren Art (hörbar, sehbar, fühlbar) sein. Durch die Steuerung des Betriebszustandes wird festgelegt, welche Signalisierung an welchem Ort vorgenommen wird. Ist keine Art der Signalisierung neben der als störend empfundenen Art vorgesehen, besteht die Möglichkeit, ankommende Anrufe bzw. Mitteilungen umzuleiten oder das mobile Gerät zu blockieren bzw. zu sperren.

Das Mittel zum Umschalten ist vorzugsweise ein elektronischer Schalter und wird über das Mittel zum Ansteuern, vorzugsweise eine Steuerungseinheit, betätigt. Das Mittel zum Empfangen von Signalen ist vorzugsweise eine Antenne oder ein Sensor. Die Steuerungseinheit setzt die über einen Sensor bzw. Antenne empfangenen Signale automatisch um. Der Schalter nimmt die durch die Steuerungseinheit angewiesene Umschaltung vor.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung einer erfindungsgemässen Anordnung in einem Gebäude;
- Fig. 2: eine schematische Darstellung einer erfindungsgemässen Anordnung in einem grösserem Gebiet;
- Fig. 3: ein schematisches Blockschaltbild eines Handys zur Durchführung des erfindungsgemässen Verfahrens.

Grundsätzlich sind in den Figuren gleiche Teile mit gleichen Bezugszeichen versehen.

### Wege zur Ausführung der Erfindung

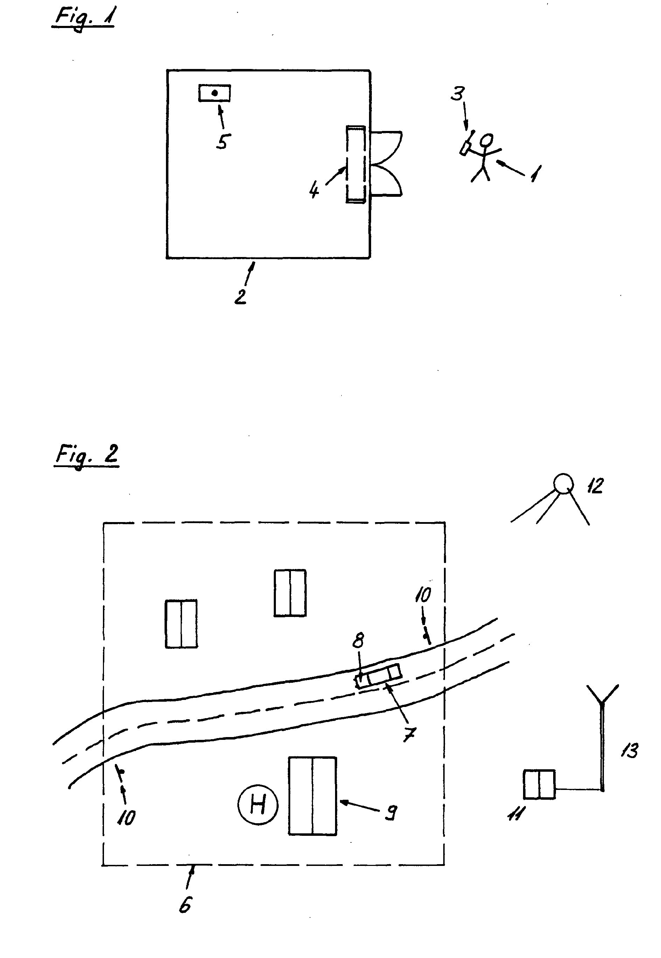

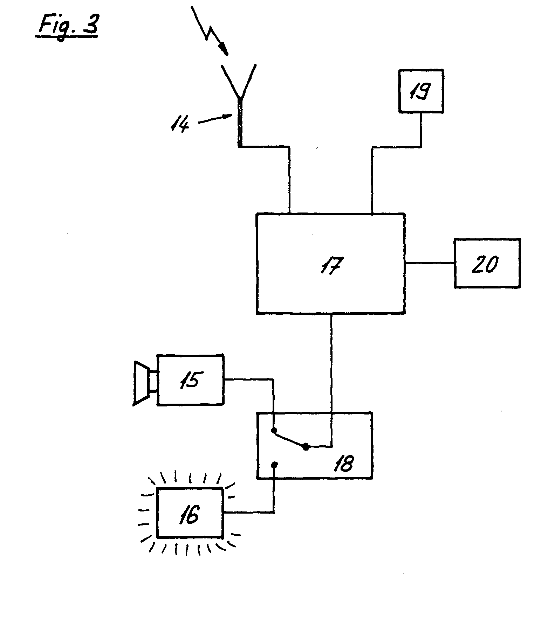

Fig. 1 zeigt beispielhaft eine schematische Darstellung zur Erläuterung der erfindungsgemässen Anordnung. Für die internen Abläufe innerhalb des Gerätes sei auf die Fig. 3 verwiesen, welche ein schematisches Blockschaltbild eines Handys zur Durchführung des erfindungsgemässen Verfahrens darstellt. Für das nachfolgende Ausführungsbeispiel wird davon ausgegangen, dass ein Benutzer 1 über ein Handy 3 verfügt, welches grundsätzlich ankommende Anrufe bzw. Mitteilungen akustisch signalisiert.

Ein Benutzer 1 betritt ein Gebäude 2 mit seinem Handy 3. Dieses Gebäude 2 ist beispielsweise ein Restaurant, eine Schule, ein Kino usw.. In diesem Gebäude 2 ist ein Betriebszustand eines mobilen Gerätes, welcher eine akustische Signalisation eines ankommenden Anrufs bzw. einer Mitteilung vorsieht, unerwünscht. Sobald der Benutzer 1 das Gebäude 2 betritt, dringt er beispielsweise in den Sende- und Empfangsbereich einer Funkbasisstation 5 ein, welche auf Basis von DECT oder Bluetooth funktioniert. Neben den Signalen im DECT- oder Bluetooth-Standard werden auch Signale mit der Anweisung zur signalgesteuerten Umschaltung von einer akustischen in eine fühlbare Signalisation für Handys ausgesendet (z.B. im GSM- oder UMTS-Frequenzbereich). Diese signalgesteuerte Umschaltung wird solange beibehalten, wie sich der Benutzer 1 mit seinem Handy 3 innerhalb des Sende- und Empfangsbereichs der Funkbasisstation 5 aufhält. Das über die Antenne des Handys 14 empfangene Signal wird von der Steuerungseinheit 17 umgesetzt. In diesem Fall wird von der Steuerungseinheit 17 an den Schalter 18 die Anweisung gegeben, von der Signalisation durch den Lautsprecher 15 auf die Signalisation durch den Vibrator 16 umzuschalten. Beim Verlassen des Sende- und Empfangsbereiches wird automatisch der ursprüngliche Betriebszustand wieder hergestellt, sobald das Handy 3 das von der Funkstation 5 ausgesendete Signal über seine Antenne 14 nicht mehr empfängt.

Das Signal wird in regelmässigen Zeitabständen z.B. alle 5 - 10 sec ausgesendet, so dass ein durch den Benutzer 1 zwischenzeitliches manuelles Umschalten auf eine akustische Signalisierung rückgängig gemacht würde. Diese automatische Rückstellung auf den vordefinierten Betriebszustand für diesen Ortsbereich ist auf alle als störend definierte Signalisierungszustände anwendbar.

Eine zusätzliche Variante ist das Ausrüsten des mobilen Gerätes mit einer Autorisierungsschaltung 20. So stehen mit ein und demselben Signal je nach Art des mobilen Gerätes verschiedene Umschaltmöglichkeiten zur Verfügung. Die in der Autorisierungsschaltung 20 vorgesehenen internen Systemeinstellungen können den von aussen gesendeten Umschaltanweisungen übergeordnet sein oder verschiedene weitere Optionen zulassen. Beinhaltet das von aussen empfangene Signal die Anweisung, ankommende Anrufe bzw. Mitteilungen auf eine Mailbox umzuleiten, kann infolge der internen Einstellung im mobilen Gerät als Option beispielsweise die Umleitung auf ein anderes Gerät vorgesehen sein.

Weiter können den mobilen Geräten verschiedene Prioritätsstufen zugeordnet werden. Prioritäten und entsprechende Optionen können beispielsweise nach Art des Berufes zugeordnet werden. Ein Arzt im Pikettdienst muss immer erreichbar sein. Aus diesem Grund wird sein Handy 3 nicht umgeschaltet, obwohl er sich innerhalb eines Bereiches befindet, in dem beispielsweise eine signalgesteuerte Umleitung auf eine Mailbox systemmässig vorgesehen ist. Meldet sich z.B. das Handy 3 des Arztes bei der Zentrale 11, um einer Zelle im Funknetz zugeordnet zu werden, erhält es das gleiche Signal zur signalgesteuerten Umschaltung, wie alle anderen Handys erhalten würden. Im Gegensatz zu diesen wird die signalgesteuerte Umschaltung jedoch nicht durchgeführt und der Zentrale 11 kann ein Signal zurückgesendet werden, dass dieses Handy 3 eine besondere Priorität geniesst. So bleibt die Form der Signalisierung, welche der Benutzer 1 eingestellt hat, weiterhin funktionsfähig. Die Zurücksendung eines Signals von dem mobilen Gerät an die Zentrale erfüllt in erster Linie eine Kontrollfunktion. Wenn ein Handy 3 in einem Ortsbereich, in welchem eigentlich eine akustische Signalisation unterbunden ist, akustisch einen ankommenden Anruf bzw. eine Mitteilung signalisiert, wird davon ausgegangen, dass dieses mobile Gerät eine Priorität geniesst. Es könnte aber auch ein Systemfehler vorliegen. Anhand eines Protokolls, welches bei der Zentrale 11 bzw. der Funkbasisstation 5 abrufbar ist, sind alle Prioritätsberechtigungen nachweisbar. Fand eine unerwünschte Signalisierungsart statt, ohne dass eine Prioritätsberechtigung vorlag, können Systemfehler einfacher erkannt und behoben werden.

Der Beruf des Arztes ist hier nur beispielsweise gewählt. Es ist im Sinne der Erfindung, dass das erfindungsgemässe Verfahren auf alle Berufe und Personen anwendbar ist, welche jederzeit und überall erreichbar sein müssen. Ein Missbrauch dieser Prioritätsregelungen lässt sich dadurch begrenzen, dass dieses Prioritätsrecht z.B. zeitlich oder räumlich eingeschränkt wird. Von besonderer Bedeutung ist eine Anordnung einer Autorisierungsschaltung 20, wenn die systemmässige Anweisung eine erfindungsgemässe Umschaltung, beispielsweise in Form einer Umleitung, des mobilen Gerätes beinhalten würde, da sonst der privilegierte Benutzer nicht mehr direkt erreichbar wäre.

Eine Sperrung bzw. Blockierung des mobilen Gerätes für ausgehende Gespräche bzw., wenn gewünscht, sogar von Mitteilungen eignet sich vorzugsweise für Schulen. Sobald ein Handy 3 das Signal zur automatischen Umschaltung gemäss obigem Beispiel empfangen hat, wird die automatische Umschaltung aktiviert. Will der Benutzer 1 nun mit seinem Handy 3 ein Gespräch führen, meldet ihm sein Handy 3, dass er sich innerhalb eines "gesperrten" Ortsbereichs befindet. Damit der Benutzer 1 ein Gespräch führen kann, muss er den definierten Ortsbereich wieder verlassen, damit sein Handy 3 auf den ursprünglichen Zustand umgeschaltet wird und die Sperrung bzw. Blockierung wieder aufgehoben ist.

Für das erfindungsgemässe Verfahren kann jede Art eines mobilen Gerätes, welches ankommende Anrufe bzw. Mitteilungen signalisiert und jede Form der sensorisch feststellbaren Signalisation, bzw. Umleitungen der ankommenden Anrufe auf eine Mailbox oder an ein anderes Gerät, verwendet werden. Ist nur eine Art der Signalisation vorhanden, findet automatisch eine Umleitung auf eine Mailbox oder ein anderes Gerät statt. Weist das mobile Gerät z.B. kein akustisches Mittel zur Signalisierung auf und die im Signal vorhandene Systemanweisung schreibt eine Umschaltung von einer akustischen in eine andere Form der Signalisierung vor, so findet keine solche automatische Umschaltung statt.

Anstatt Funkbasisstationen 5 nach dem DECT- oder Bluetooth-Standard können auch andere Funkbasisstationen, welche in den (gesetzlich) zugewiesenen Frequenzbereichen Signale aussenden können, verwendet werden. Neben der Lösung mit Funkbasisstationen, welche den ganzen Raum abdecken, können auch solche Funkbasisstationen verwendet werden, die einen Richtstrahl aussenden. Dieser Richtstrahl wird vorzugsweise auf die Ein- und Ausgänge gerichtet.

Weitere Möglichkeiten ergeben sich durch die Anordnung von Schleusen 4 bei jedem Ein- und Ausgang. Beim Betreten eines Gebäudes 2 bzw. eines Raumes durch die Schleuse 4 wird der Betriebszustand des Handys 3 signalgesteuert systemgemäss umgeschaltet. Durch das Verlassen des Gebäudes 2 bzw. des Raumes wird automatisch der ursprüngliche Betriebszustand wieder hergestellt. Damit diese Lösungen vom Handy 3 umgesetzt werden können, ist das Handy 3 mit einem Sensor 19 ausgestattet. Die internen Abläufe beim Empfang eines Steuersignals über den Sensor 19 sind die gleichen wie sie aus dem Empfang eines Steuersignals über die Antenne 14 resultieren würden.

Es können Systeme verwendet werden, die mit Induktionsschlaufen gekoppelt sind. Durchschreitet der Benutzer 1 mit seinem Handy 3 eine Schleuse 4, detektiert der Sensor 19 beispielsweise ein elektromagnetisches Feld. Vorteilsweise ist das elektromagnetische Feld moduliert. Dabei kann die Modulation beispielsweise in der Frequenz und/oder der Amplitude der elektromagnetischen Felder erfolgen. In der Steuerungseinheit 17 kann diese Kombination als Anweisung gespeichert sein, dass beispielsweise die akustische Signalisation abgeschaltet werden muss. Es ist hierbei jede gerätespezifische Umschaltung denkbar. Um gegebenenfalls anderen störenden Betriebszuständen vorzubeugen, kann damit auch die Anweisung verbunden sein, das mobile Gerät abzuschalten. Verlässt der Benutzer 1 das Gebäude 2 bzw. den Raum durch die Schleuse 4, detektiert der Sensor 19 das elektromagnetische Feld und damit wird in dem mobilen Gerät über die Steuerungseinheit 17 der Schalter 18 angewiesen, den ursprünglichen Betriebszustand wiederherzustellen.

Eine weitere Anwendung des Verfahrens ist bei Fahrzeugen gegeben. Bei einem Fahrzeug könnten die Türen wie die Schleuse 4 des obengenannten Beispiels ausgebildet zu sein. Mit solchen Massnahmen liesse sich verhindern, dass Handys ein Sicherheitsrisiko darstellen und z.B. ohne Freisprechvorrichtung in Fahrzeugen benutzt werden können.

Im Luftverkehr können mobile Geräte vor allem beim Start und Landung Störungen im elektronischen System des Flugzeuges verursachen. Zur Lösung dieses Problems bietet sich die Erfindung geradezu an. Vor dem Besteigen eines Flugzeuges wird ein Raumbereich durchschritten, in welchem das mobile Gerät in einen Standby- oder Sleep mode (safety mode) geschaltet wird. Dieser Raumbereich könnte in den Metalldetektor-Schleusen, welche heutzutage in jedem Flughafen bereits vorhanden sind, integriert sein. Normalerweise muss bei der Gepäckdurchleuchtung vor dem Betreten des Flugzeuges das Handy abgegeben werden. Bei der separaten Durchleuchtung kann bei diesem Vorgang die signalgesteuerte Umschaltung des Handys in einen Standby- oder Sleep mode (safety mode) stattfinden. Mit der Deaktivierung kann eine Umleitung auf eine Mailbox oder ein anderes Gerät verbunden sein. Steigt man aus dem Flugzeug aus und durchschreitet wieder einen Raumbereich, wird das mobile Gerät aktiviert und der Benutzer kann es wieder auf jegliche gewünschte Art benutzen.

In Fig. 2 ist beispielhaft das Verfahren dargestellt, wenn ein grösserer Bereich abgedeckt werden soll, welcher mit Basisstationen 5 oder Schleusen 4 nicht oder nur sehr aufwendig erfasst werden kann. Das gleiche Problem stellt sich, wenn im freien Gelände ein Bereich 6 definiert werden soll. In solchen Fällen bietet sich das GPS (Global Positioning System) an. In einer Zentrale 11 werden alle Bereiche mit Koordinaten erfasst, in welchen eine Signalisierung eines mobilen Gerätes nicht oder nur beschränkt zugelassen sein soll. Der Aufenthaltsort von Handys 3 wird bei jeder Anmeldung im Netz erfasst. So ist es möglich, den Aufenthaltsort ziemlich genau zu bestimmen. Dringt nun ein Handy 3 in einen solchen definierten Ortsbereich ein, wird von einer Zentrale 11 ein Signal ausgesendet, welches den Betriebszustand des Handys 3 gemäss den Voreinstellungen des Systems umschaltet.

Das Handy 3 kann mit einem GPS-Empfänger ausgerüstet sein. Der Benutzer 1 kann auch ohne Zentrale 11 GPS-Koordinaten in seinem Handy 3 eingeben. Das Handy 3 vergleicht dann die empfangenen GPS-Signale mit den vorhandenen GPS-Koordinaten im Speicher, damit beim Eindringen in einen selbst definierten Ortsbereich das Handy 3 automatisch umgeschaltet wird.

Diese Anwendungen können beliebig weitergeführt werden. Immer mehr Fahrzeuge sind mit einem Navigationssystem auf Basis des GPS ausgerüstet. Der Standort ist somit koordinatenmässig jederzeit feststellbar. Ist ein Benutzer 1 mit seinem Fahrzeug 7 unterwegs und dringt in einen über Koordinaten definierten Bereich 6 ein, so wird beispielsweise die Hupe 8 seines Fahrzeuges 7 deaktiviert. Diese Anwendung des Verfahrens ist von besonderem Interesse, wenn in diesem Bereich beispielsweise ein Spital 9 gelegen ist. Verlässt der Benutzer 1 mit seinem Fahrzeug 7 den Bereich 6, so wird die Hupe 8 seines Fahrzeuges 7 wieder in Funktion gesetzt und er kann diese Hupe 8 ohne Einschränkungen benutzen. Ein solcher Bereich 6 könnte auf ein ganzes Stadtgebiet ausgeweitet werden. Anstatt den Bereich über GPS-Koordinaten zu definieren, ist auch der Einbezug von Ortsschildern 10 eine weitere Möglichkeit. Fährt ein Benutzer 1 mit seinem Fahrzeug 7 in einen definierten Bereich, durchquert er beispielsweise ein elektromagnetisches Feld, welches von einer Vorrichtung an dem Ortsschild erzeugt wird. Aufgrund dessen findet die signalgesteuerte Umschaltung der Hupe 8 seines Fahrzeuges 7 statt. Verlässt er den definierten Bereich, kommt er an einem weiteren, mit derselben Vorrichtung versehenen Ortsschild 10 vorbei, bei dem auch ein elektromagnetisches Feld aufgebaut ist. Es findet eine signalgesteuerte Umschaltung in den ursprünglichen Betriebszustand statt und die Hupe 8 seines Fahrzeuges 7 ist wieder funktionsfähig.

Bei allen ausgeführten Anwendungsbeispielen muss die Präsenz eines mobilen Gerätes erfasst werden. Bei der erfindungsgemässen Lösung, bei der eine Schleuse oder ein elektromagnetisches Feld durchschritten wird, erfolgt die Umschaltung automatisch durch eingebaute Sensoren 19. Die voreingestellte Umschaltung kann durch verschiedene Signale gesteuert werden. So kann nur die Anruf- bzw. Mitteilungssignalisierung umgestellt werden. Anderseits ist auch die Blockierung des gesamten mobilen Gerätes mit oder ohne Umleitung auf ein anderes Gerät oder eine Mailbox denkbar.

Ansonsten muss die Präsenz durch Abfragen festgestellt werden. Es bieten sich zwei Prinzipien an. Einmal eine Abfrage seitens einer Zentrale 11. Wird ein mobiles Gerät angerufen bzw. dem Gerät eine Mitteilung übersandt, fragt die Zentrale 11, ob der Aufenthaltsort sich innerhalb eines bestimmten definierten Bereiches befindet. Ist dies der Fall, so wird je nach der systemmässigen Voreinstellung ein Signal, beispielsweise über einen Satelliten 12 oder einer Sende-/Empfangsantenne der Zentrale 13, vorausgesendet, welches den Signalisierungszustand signalgesteuert umschaltet und erst dann den Anruf bzw. die Mitteilung übermittelt. Dieses Signal kann ein SMS oder ein normales Funksignal sein. Man kann dieses Prinzip auch mit der Frage beschreiben: "Befindet sich das angerufene mobile Gerät innerhalb eines definierten Bereiches?".

Die andere Variante beruht auf einem Zellenprinzip, nach dem beispielsweise die Mobilkommunikation aufgebaut ist. Das ganze abgedeckte Sende-/Empfangsnetz ist in einzelne Zellen unterteilt. Handys 3 werden der entsprechenden Zelle zugeordnet. Dieses System erlaubt ankommende Anrufe sofort weiterzuleiten. Diese Abfrage des Handys könnte mit einer ergänzenden Frage verbunden werden. Jedesmal wenn sich das Handy neu anmeldet könnte es zusätzlich fragen: "Bin ich in einem definierten Bereich?". Sollte sich das Handy 3 innerhalb eines solchen definierten Bereiches befinden, wird wiederum von der Zentrale 11 ein Signal zurückgesendet, welches die voreingestellte Umschaltung beim Handy 3 vornimmt. Wechselt der Benutzer 1 seinen Aufenthaltsort, so dass er sich mit seinem Handy 3 ausserhalb des definierten Bereiches befindet, so wird bei der nächsten Abfrage des Handys 3 der ursprüngliche Zustand wiederhergestellt.

Durch das Zellenprinzip in der Mobilkommunikation kann einer GSM-Funkstation ein Signal zu einer signalgesteuerten Umschaltung zugeordnet werden. Dies hat zur Folge, dass im gesamten Sendebereich dieser GSM-Funkstation diese Umschaltung aktiv wäre.

Zusammenfassend ist festzustellen, dass durch die Erfindung die Möglichkeit geschaffen worden ist, die unerwünschten Auswirkungen auf die Gesellschaft infolge der Zunahme mobiler Geräte, insbesondere von Handys, welche ankommende Anrufe bzw. Mitteilungen sensorisch feststellbar signalisieren, zu begrenzen. Durch die konzeptionelle Ausgestaltung des erfindungsgemässen Verfahrens und der entsprechenden Vorrichtung dazu können mit einfachen und teils bereits bestehenden Mitteln die resultierenden Störungen unserer Gesellschaft durch die Verbreitung mobiler Geräte in einem zumutbaren und vernünftigen Rahmen gehalten werden.

## Patentansprüche

1. Verfahren zum Betreiben eines mobilen Gerätes mit mindestens zwei verschiedenen Betriebszuständen, wovon mindestens einer ein sensorisch feststellbarer Signalisierungszustand ist, dadurch gekennzeichnet, dass ein Umschalten von einem ersten in einen zweiten Betriebszustand ortsabhängig signalgesteuert durchgeführt wird.

2. Verfahren nach Anspruch 1, dadurch gekennzeichnet, dass das ortsabhängige signalgesteuerte Umschalten gestützt auf GPS-Koordinaten erfolgt.

3. Verfahren nach einem der Ansprüche 1 bis 2, dadurch gekennzeichnet, dass mit Hilfe von GPS-Koordinaten ein Ortsbereich (6) vorgegeben und abgespeichert wird.

4. Verfahren nach einem der Ansprüche 1 bis 3, dadurch gekennzeichnet, dass als mobiles Gerät ein Kommunikationsgerät, insbesondere ein mobiles Telefongerät (3), ein Pager, ein Schnurlostelefon oder ein Funkgerät, verwendet wird.

5. Verfahren nach einem der Ansprüche 1 bis 4, dadurch gekennzeichnet, dass in einem der Betriebszustände eine Umleitung der Anrufe bzw. Mitteilungen, insbesondere auf eine Mailbox oder ein anderes mobiles Gerät, erfolgt.

6. Verfahren nach einem der Ansprüche 1 bis 4, dadurch gekennzeichnet, dass in einem der Betriebszustände eine Umschaltung auf einen Standby oder Sleep Modus erfolgt.

7. Verfahren nach einem der Ansprüche 1 bis 4, dadurch gekennzeichnet, dass die Definition des Ortsbereiches über eine für den Bereich zuständige Funkbasisstation (5) erfolgt.

8. Verfahren nach einem der Ansprüche 1 bis 7, dadurch gekennzeichnet, dass eine Abfrage über die Präsenz des mobilen Gerätes im definierten Ortsbereich seitens des mobilen Gerätes oder seitens der Funkbasisstation (5) erfolgt.

9. Verfahren nach einem der Ansprüche 1 bis 8, dadurch gekennzeichnet, dass die Umschaltung durch eine separate Sendevorrichtung erfolgt, insbesondere mit Infrarot-Signalen, DECT-, Bluetooth-Signalen oder Signalen von Induktionsschlaufen arbeitet.

10. Verfahren nach einem der Ansprüche 1 bis 9, dadurch gekennzeichnet, dass das mobile Gerät ein Autorisierungsmittel (20) aufweist.

11. Verfahren nach einem der Ansprüche 1 bis 10, dadurch gekennzeichnet, dass die ortsabhängige signalgesteuerte Umschaltung zeitlich begrenzt wird.

12. Vorrichtung zur Durchführung des Verfahrens nach Anspruch 1, dadurch gekennzeichnet, dass die Vorrichtung ein mobiles Gerät, insbesondere ein Kommunikationsgerät, welches beim Erhalt von Anrufen bzw. Mitteilungen eine Signalisation vornimmt, und eine Sendevorrichtung umfasst, welche ein Signal zur signalgesteuerten Umschaltung des mobilen Gerätes aussendet.

13. Mobiles Gerät für eine Vorrichtung nach Anspruch 12, dadurch gekennzeichnet, dass dieses
a) mindestens ein Mittel zur Signalisierung (15, 16) eines Anrufes beziehungsweise einer Mitteilung;
b) mindestens ein Mittel zum Umschalten (18) zwischen einem ersten und einem zweiten Betriebszustand;
c) mindestens ein Mittel zum Ansteuern (17) des Mittels zum Umschalten und
d) mindestens ein Mittel zum Empfangen (14, 19) eines Signals mit der Anweisung zum Umschalten umfasst.

14. Mobiles Gerät nach Anspruch 13, dadurch gekennzeichnet, dass dieses zusätzlich mit einem Autorisierungsmittel (20) ausgerüstet ist.

15. Sendevorrichtung für eine Vorrichtung nach Anspruch 12, dadurch gekennzeichnet, dass die Sendevorrichtung ein Mittel zum Erzeugen und Senden von Steuersignalen umfasst, welche beim Empfang durch ein mobiles Gerät dieses mobile Gerät von einem ersten in einen zweiten Betriebszustand ortsabhängig umschalten.

16. Vorrichtung nach Anspruch 15, dadurch gekennzeichnet, dass die Sendevorrichtung Induktionsschlaufen an mindestens einem Ein- und Ausgang (4) des zu definierenden Ortsbereiches umfasst.

17. Vorrichtung nach Anspruch 15, dadurch gekennzeichnet, dass die Sendevorrichtung ein System auf der Basis von GSM, UMTS, Infrarot, DECT oder Bluetooth ist.
